Europäisches Patentamt

European Patent Office

Office européen des brevets

(11) Publication number: **0 481 439 A2**

# EUROPEAN PATENT APPLICATION

(21) Application number: **91117596.6**

(22) Date of filing: **15.10.91**

(51) Int. Cl.5: **G06F 15/40**

(30) Priority: **17.10.90 JP 277991/90**

(43) Date of publication of application:
**22.04.92 Bulletin 92/17**

(84) Designated Contracting States:
**DE FR GB**

(71) Applicant: **FUJITSU LIMITED**
**1015, Kamikodanaka Nakahara-ku**
**Kawasaki-shi Kanagawa 211(JP)**

(72) Inventor: **Ryu, Tadamitsu, c/o Fujitsu Network**
**Eng. Ltd.**
**100-1, Sakato, Takatsu-ku**
**Kawasaki-shi, Kanagawa, 213(JP)**
Inventor: **Kakehi, Gen, c/o Fujitsu Network**
**Eng. Ltd.**
**100-1, Sakato, Takatsu-ku**
**Kawasaki-shi, Kanagawa, 213(JP)**
Inventor: **Aoe, Shigeru, c/o Fujitsu Network**
**Eng. Ltd.**
**100-1, Sakato, Takatsu-ku**
**Kawasaki-shi, Kanagawa, 213(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **Database processing system.**

(57) A database processing system includes an entity file (1) which stores individual data units (5) in forms corresponding to link types, a plurality of programs (2A-2X, 2-1 - 2-6) for making access to the data units within the entity file based on commands which specify data units and link types which are to be used when retrieving the data units, a plurality of link parts tables (3A-3X, 3-0, 3-4 - 3-6) which are provided in correspondence with the programs, where each of the link parts table supplies link parts information (6) specified by the link type to the corresponding one of the programs, a command address table (4) for converting the command which specifies the data unit and is obtained from one of the programs into an address of the entity file to make access to the address of the entity file, and an output part (7) for outputting the data unit to which the access is made using the command address table.

FIG. 3

# FIG.4

## BACKGROUND OF THE INVENTION

The present invention generally relates to database processing systems, and more particularly to a database processing system for a database which is provided with entity files and stores data units, and enables the use of the data units as flexible data structures.

As data structures of data which are stored in a database, there are various known systems including a system which uses a link data table and a system which has a structure link. Conventionally, various systems have been employed as the data structure for giving the data storage form within the database.

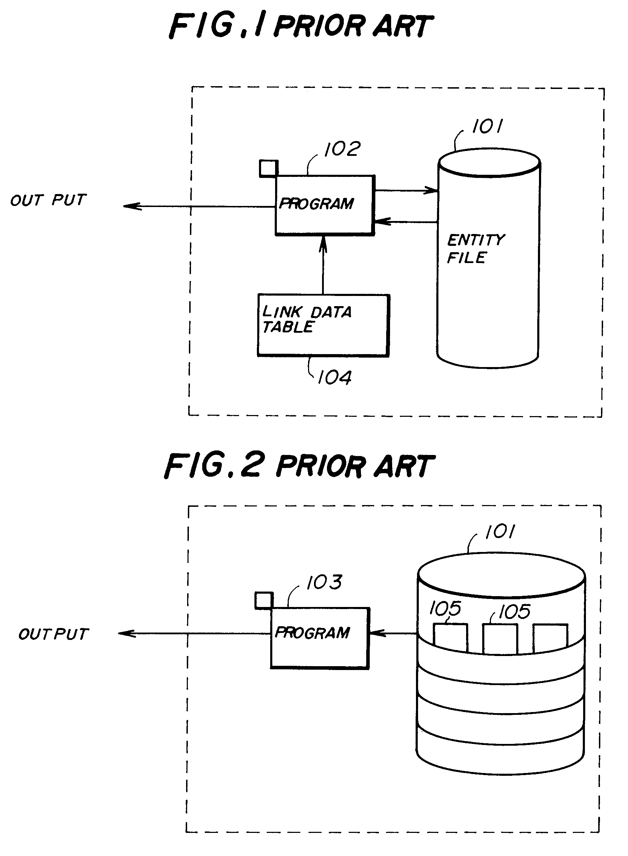

FIG.1 generally shows a system which uses a link data table, and FIG.2 generally shows a system which uses a data structure. In FIGS.1 and 2, an entity file 101 stores data. In FIG.1, a program 102 carries out a link process by referring to link data stored in a link data table 104. In FIG.2, a program 103 makes a link by referring to the structure within the entity file 101 which is made up of data 105.

In the case of the system shown in FIG.1, the data within the entity file 101 are correlated using a tree structure or the like, for example, and this correlation is stored in the link data table 104 in the form of the link data. The program 102 makes access to the data within the entity file 101 by referring to the link data stored in the link data table 104.

On the other hand, in the system shown in FIG.2, the data 105 within the entity file 101 has a structure, and the program 103 makes access to the data 105 within the entity file 101 based on this structure.

However, according to the systems shown in FIGS.1 and 2, the data which indicates the link must be installed one by one by a program. In addition, the database conventionally employs a single system, and the access to the data can only be made in conformance with the system which is employed by the database. Therefore, there is a problem in that the conventional system lacks flexibility as to the manner in which the access to the data may be made. On the other hand, there are cases where it is desirable to use certain data in one system and other data in another system when carrying out a predetermined process, but the conventional system cannot cope with such cases and totally lacks flexibility.

## SUMMARY OF THE INVENTION

Accordingly, it is a general object of the present invention to provide a novel and useful databsae processing system in which the problems described above are eliminated.

Another and more specific object of the present invention is to provide a database processing system comprising an entity file which stores individual data units in forms corresponding to link types, a plurality of programs for making access to the data units within the entity file based on commands which specify data units and link types which are to be used when retrieving the data units, a plurality of link parts tables which are provided in correspondence with the programs, where each of the link parts table supplies link parts information specified by the link type to the corresponding one of the programs, a command address table for converting the command which specifies the data unit and is obtained from one of the programs into an address of the entity file to make access to the address of the entity file, and output means for outputting the data unit to which the access is made using the command address table. According to the database processing system of the present invention, the processing can be carried out under an arbitrary link type. In addition, it is possible to use one data unit or one data unit group under a plurality of link types, depending on the needs. The data units within the entity file are treated as having the respective data structures.

Other objects and further features of the present invention will be apparent from the following detailed description when read in conjunction with the accompanying drawings.

## BRIEF DESCRIPTION OF THE DRAWINGS

FIG.1 is a system block diagram generally showing a conventional system which uses a link data table;

FIG.2 is a system block diagram generally showing a conventional system which uses a data structure;

FIG.3 is a system block diagram for explaining an operating principle of the present invention;

FIG.4 is a system block diagram showing an embodiment of a database processing system according to the present invention;

FIG.5 is a flow chart for explaining a data registering process of the embodiment; and

FIG.6 is a flow chart for explaining a display process of the embodiment.

## DESCRIPTION OF THE PREFERRED EMBODIMENTS

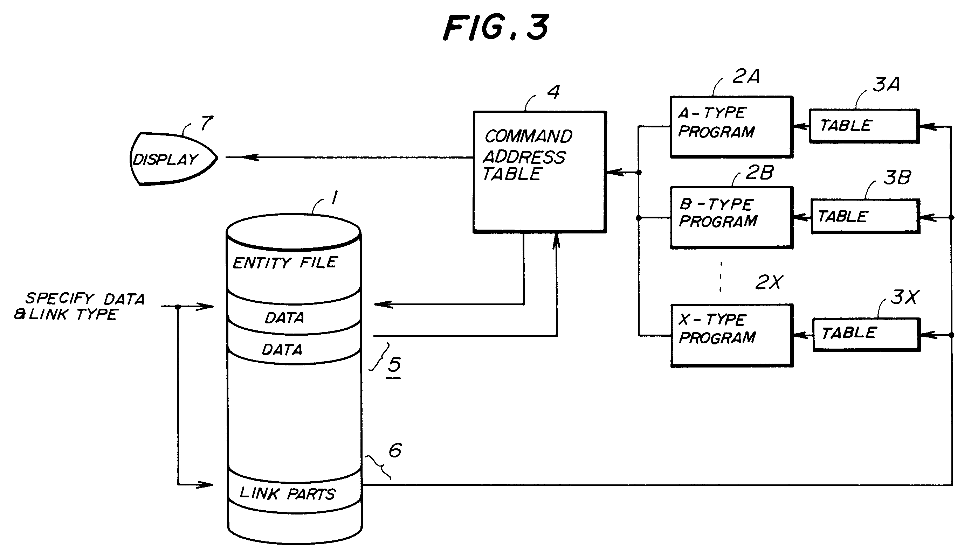

First, a description will be given of an operating principle of the present invention, by referring to FIG.3.

A database processing system shown in FIG.3 generally includes an entity file 1, an A-type link program 2A, a B-type link program 2B, ..., an X-type link program 2X, link parts tables 3A through 3X, a command address table 4 and a display device 7. The entity file 1 includes data units 5 and link parts information 6.

A command which can specify each data unit is given with respect to the data units 5. The command address table 4 stores in the form of a table the commands for specifying each of the data units 5 in correspondence with the addresses where the corresponding data units 5 are stored in the entity file 1.

Each of the link programs 2A, 2B, ... refers to the contents of the corresponding one of the link parts tables 3A, 3B, ... and carries out a process for processing the data units 5 in the entity file 1.

For example, the link parts information 6 is stored in the entity file 1. When one of the link programs 2A, 2B, ... to be used for making access to a data group of the data units 5 is specified, the link parts information 6 which is sufficient to operate the one link program is transferred to the corresponding one of the link parts tables 3A, 3B, ... .

When the data group and the link type to be used are specified, the link parts information 6 which corresponds to the specified link type is transferred to the link parts table 3B, for example. In addition, the link program 2B refers to the contents of the link parts table 3B and carries out the process for processing the data units 5. In this state, when displaying the desired data unit 5, for example, the link program 2B generates a command which specifies the desired data unit 5. As a result, the command address table 4 determines the corresponding address to make access to the entity file 1, and the desired data unit 5 is read from the entity file 1 and displayed on the display device 7.

The link parts information 6 is generally described so that it can be set in correspondence with a certain data unit group. However, a plurality of kinds of link parts information 6 may be prepared in correspondence with the individual data units or individual data unit groups if necessary. In either case, the data units 5 in the entity file 1 are treated as having respective data structures by selecting the link parts information 6 and one of the link programs 2A, 2B, ... .

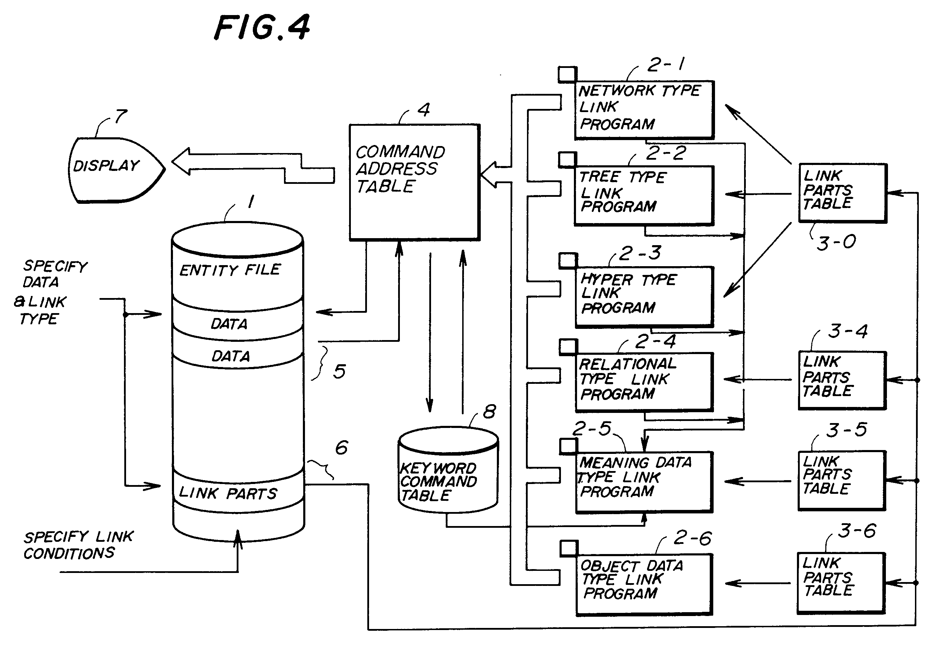

Next, a description will be given of an embodiment of a database processing system according to the present invention, by referring to FIG.4. In FIG.4, those parts which are basically the same as those corresponding parts in FIG.3 are designated by the same reference numerals, and a description thereof will be omitted.

In this embodiment, a keyword command table 8 is provided in addition to those elements shown in FIG.3. In addition, there are six kinds of link programs 2-i (i = 1, 2, ..., 6). The six link programs are (i) a network type link program 2-1, (ii) a tree type link program 2-2, (iii) a hyper type link program 2-3, (iv) a relational type link program 2-4, (v) meaning data type link program 2-5, and (vi) object data type link program 2-6.

When using the meaning data type link program 2-5, a reference is made to the contents of the link parts table 3-5. In addition, the required keywords (kw) are obtained from the keyword command table 8 and the required tree type links are obtained from the tree type link program 2-2. Similarly, the required network type links, the required hyper type links and the required relational type links are obtained from the respective network type link program 2-1, hyper type link program 2-3 and relational type link program 2-4.

One or a plurality of link parts information 6 are stored in the entity file 1 in a manner such that the link parts information 6 can be set arbitrarily, in correspondence with the data unit 5 and/or the data unit group as described above. The link parts information 6 is set by specifying a link condition. It may be regarded that information called a source of schema and relational information of the schema are set in the link parts information 6. In order to process the data unit 6 or the data unit group using the relational type link program 2-4, the relation of the data unit 5 or the data unit group is set as the link parts information 6 and the link parts information 6 is transferred to the link parts table 3-4.

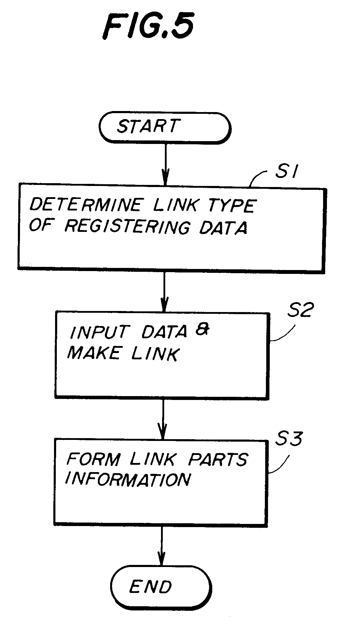

FIG.5 shows a data registering process of the embodiment. In FIG.5, a step S1 determines the link type of the registering data unit 5. Of course, a plurality of link types for a plurality of registering data units 5 may be determined. A step S2 inputs the data unit 5 and makes a link with regard to the input data unit 5. Then, a step S3 forms the link parts information 6 and the data registering process ends.

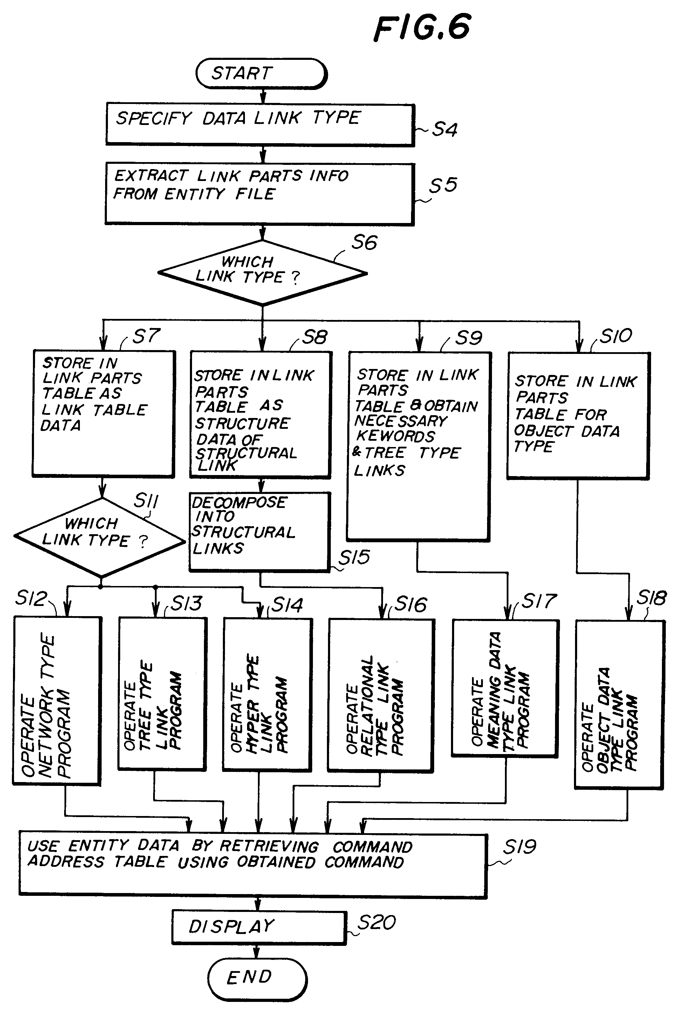

FIG.6 shows a display process of the embodiment. In FIG.6, a step S4 specifies the data unit 5 or the data unit group and the link type. A step S5 extracts the link parts information 6 from the entity file 1. A step S6 investigates the link type. A step S7 transfers the link parts information 6 to the link parts table 3-0 as the link table data if the system employed uses the link data table. A step S8 transfers the link parts information 6 to the link parts table 3-4 as the structure data of the structural link if the system employed uses the structure data. A step S9 transfers the link parts information 6 to the link parts table 3-5 if the system employed is the meaning data type, and obtains the required keywords from the keyword command table 8 and the required tree type links from the tree type link program 2-2. A step S10 transfers the link parts information 6 to the link parts table 3-6 if the system employed is the object data type.

A step S11 investigates the type within the system which employs the link data table. In the case of the net type, a step S12 operates the link program 2-1. In the case of the tree type, a step S13 operates the link program 2-2. In the case of the hyper type, a step S14 operates the link program 2-3.

A step S15 decomposes the data into structural links. A step S16 operates the relational type link program 2-4. A step S17 operates the meaning data type link program 2-5. A step S18 operates the object data type link program 2-6.

A step S19 converts the command which is obtained as a result when one of the link programs is operated into an address in the command address table 4, so as to obtain the desired data unit 5. In other words, the command which is obtained when one of the link programs is operated is used to retrieve the corresponding address from the command address table 4, so as to obtain the entity data. Then, a step S20 displays the desired data unit 5 on the display device 7.

Therefore, according to this embodiment, the processing can be carried out under an arbitrary link type. In addition, it is possible to use one data unit or one data unit group under a plurality of link types, depending on the needs.

Further, the present invention is not limited to these embodiments, but various variations and modifications may be made without departing from the scope of the present invention.

Reference signs in the claims are intended for better understanding and shall not limit the scope.

**Claims**

1. A database processing system characterized in that there are provided: an entity file (1) which stores individual data units (5) in forms corresponding to link types; a plurality of programs (2A-2X, 2-1 - 2-6) for making access to the data units within the entity file based on commands which specify data units and link types which are to be used when retrieving the data units; a plurality of link parts tables (3A-3X, 3-0, 3-4 - 3-6) which are provided in correspondence with the programs, each of the link parts table supplying link parts information (6) specified by the link type to the corresponding one of the programs; a command address table (4) for converting the command which specifies the data unit and is obtained from one of the programs into an address of the entity file to make access to the address of the entity file; and output means (7) for outputting the data unit to which the access is made using the command address table.

2. The database processing system as claimed in claim 1, characterized in that the link parts information (6) is described in correspondence with the data units (5).

3. The database processing system as claimed in claim 1 or 2, characterized in that each link parts table (3A-3X, 3-0, 3-4 - 3-6) supplies to the corresponding program (2A-2X, 2-1 - 2-6) the link parts information (6) which is specified by the link type and is retrieved from the entity file (1).

4. The database processing system as claimed in claim 3, characterized in that the link parts information (6) is transferred from the entity file (1) to the link parts table (3A-3X, 3-0, 3-4 - 3-6) which corresponds to an arbitrary program (2A-2X, 2-1 - 2-6) when said arbitrary program is used.

5. The database processing system as claimed in any of claims 1 to 4, characterized in that at least one link parts table (3-0) is used in common by a plurality of the programs (2-1 - 2-3).

6. The database processing system as claimed in any of claims 1 to 5, characterized in that said output means (7) includes display means (7) for displaying the data unit (5) to which the access is made using the command address table (4).

7. The database processing system as claimed in any of claims 1 to 6, characterized in that the programs (2A-2X, 2-1 - 2-6) include at least two kinds of programs selected from a group consisting of a network type link program (2-1), a tree type link program (2-2), a hyper type link program (2-3), a relational type link program (2-4), a meaning data type link program (2-5) and an object data type link program (2-6).

8. The database processing system as claimed in claim 7, characterized in that the network type link program (2-1), the tree type link program (2-2) and the hyper type link program (2-3) use one (3-0) of the link parts tables (3A-3X, 3-0, 3-4 - 3-6) in common.

9. The database processing system as claimed in claim 7 or 8, characterized in that the meaning data type link program (2-5) uses in addition to contents of one (3-5) of the link parts table (3A-3X, 3-0, 3-4 - 3-6) keywords, tree type links obtained from the tree type link program (2-2), network type links obtained from the network type link program (2-1), hyper type links obtained from the hyper type link program (2-3) and relational type links obtained from the relational type link program (2-4).

10. The database processing system as claimed in claim 9, which further comprises a keyword command table (8) which supplies the keywords to the meaning data type link program (2-5).

11. The database processing system as claimed in claim 10, characterized in that the keyword command table (8) is coupled to the command address table (4).

12. The database processing system as claimed in any of claims 1 to 11, characterized in that the link parts information (6) is described in correspondence with a group of data units (5).

# FIG.1 PRIOR ART

OUT PUT

*102* PROGRAM

*101* ENTITY FILE

LINK DATA TABLE

*104*

# FIG.2 PRIOR ART

OUTPUT

*103* PROGRAM

*101*

*105* *105*

FIG.3

## FIG.4

SPECIFY DATA & LINK TYPE

SPECIFY LINK CONDITIONS

DISPLAY 7

ENTITY FILE 1

DATA

DATA

5

LINK PARTS 6

COMMAND ADDRESS TABLE 4

KEYWORD COMMAND TABLE 8

NETWORK TYPE LINK PROGRAM 2-1

TREE TYPE LINK PROGRAM 2-2

HYPER TYPE LINK PROGRAM 2-3

RELATIONAL TYPE LINK PROGRAM 2-4

MEANING DATA TYPE LINK PROGRAM 2-5

OBJECT DATA TYPE LINK PROGRAM 2-6

LINK PARTS TABLE 3-0

LINK PARTS TABLE 3-4

LINK PARTS TABLE 3-5

LINK PARTS TABLE 3-6

EP 0 481 439 A2

# FIG.5

START

↓

DETERMINE LINK TYPE
OF REGISTERING DATA — S1

↓

INPUT DATA &
MAKE LINK — S2

↓

FORM LINK PARTS
INFORMATION — S3

↓

END

# FIG.6

START

SPECIFY DATA LINK TYPE — S4

EXTRACT LINK PARTS INFO FROM ENTITY FILE — S5

WHICH LINK TYPE ? — S6

STORE IN LINK PARTS TABLE AS LINK TABLE DATA — S7

STORE IN LINK PARTS TABLE AS STRUCTURE DATA OF STRUCTURAL LINK — S8

STORE IN LINK PARTS TABLE & OBTAIN NECESSARY KEWORDS & TREE TYPE LINKS — S9

STORE IN LINK PARTS TABLE FOR OBJECT DATA TYPE — S10

WHICH LINK TYPE ? — S11

DECOMPOSE INTO STRUCTURAL LINKS — S15

OPERATE NETWORK TYPE PROGRAM — S12

OPERATE TREE TYPE LINK PROGRAM — S13

OPERATE HYPER TYPE LINK PROGRAM — S14

OPERATE RELATIONAL TYPE LINK PROGRAM — S16

OPERATE MEANING DATA TYPE LINK PROGRAM — S17

OPERATE OBJECT DATA TYPE LINK PROGRAM — S18

USE ENTITY DATA BY RETRIEVING COMMAND ADDRESS TABLE USING OBTAINED COMMAND — S19

DISPLAY — S20

END

11